# EUROPEAN PATENT APPLICATION

(11) **EP 1 189 436 A1**
(43) Date of publication of application: **20.03.2002**
(21) Application number: 00940771.9
(22) Date of filing: 21.06.2000
(51) Int. Cl.: H04N 5/63

(54) **HEAD-MOUNTED DISPLAY**

(30) Priority: 23.06.1999 JP 17725399
(71) Applicant: Olympus Optical Co., Ltd., Tokyo 151-0072 (JP)
(72) Inventor: SUGIMOTO, Naoya, Tokyo 191-0016 (JP); MAEDA, Yosihiro, Tokyo 192-0083 (JP)
(74) Representative: von Hellfeld, Axel, Dr. Dipl.-Phys.
(86) International application number: JP0004037
(87) International publication number: WO0079790

(57) **Abstract**

A control unit for head-mounted image display deices consists mainly of a glowing illumination circuit (52), a video signal detection unit (42), a power control unit (49), and an emission pulse adjustment unit (51). The glowing illumination circuit boosts supply voltage and applies resultant voltage to an illumination unit (48) that illuminates an LCD (47). The video signal detection unit detects whether a video signal has been received. If it is detected that the video signal has been received, the power control unit delivers the supply voltage to the glowing illumination circuit. If it is not detected that the video signal has been received, the power control unit discontinues delivery of the supply voltage. When the supply voltage delivered from the power control unit is high, the emission pulse adjustment unit produces a pulse of short pulse duration. When the supply voltage is low, the emission pulse adjustment unit produces a pulse of long pulse duration. When the pulse duration is short, the glowing illumination circuit boosts the supply voltage a little. When the pulse duration is long, the glowing illumination circuit boosts the supply voltage largely. Thus, substantially constant voltage is applied to the illumination unit.

## Description

### Technical Field

The present invention relates to a control unit for head-mounted image display devices, or more particularly, to a control unit for head-mounted image display devices that controls images to be displayed and voice.

### Background Art

In recent years, various types of head-mounted image display devices have been proposed and commercialized so that images displayed on a large-size screen can be enjoyed readily. For example, Japanese Unexamined Patent Publication No. 8-40395 describes a head-mounted image display device shaped like spectacles or goggles. The head-mounted image display device consists mainly of a main body that is mounted on the head, an adapter that is connected to the main body over a trunk cable, and headphones that are connected to the adapter. The main body includes a lens unit that magnifies an image and a display unit that displays an image. The adapter includes a power circuit that supplies power to the main body, a drive circuit that drives the display unit, and a voice circuit that drives the headphones.

The present applicant has commercialized a head-mounted image display device that is designed to be lightweight and offer high image quality by utilizing a free-form surface prism. Japanese Unexamined Patent Publication No. 10-353359 describes a control unit for controlling such a head-mounted image display device.

The head-mounted image display device has goggles connected to a control unit over a connection cord. The goggles serve as a main body to be mounted on the head for use. The goggles receive a video signal and a voice signal as well as power from the control unit. An image is then projected on user's eyeballs by means of an LCD and an optical system incorporated in the goggles. Moreover, voice is propagated to user's ears through appended earphones or the like.

The brightness or contrast of an image, a volume, or the on or off state of a power supply is controlled by manipulating the control unit.

The control unit receives a video signal, based on which images are displayed on the goggles, from a video source. Specifically, the control unit is connected to the video source, for example, a television set, a video player, or a DVD player over another connection cord, and thus receives the video signal from the video source.

Currently, many electric appliances are demanded to reduce power consumption. As for the foregoing head-mounted image display device, there is a demand for realizing an art of meeting the demand. In particular, a head-mounted video display device that is supposedly used as a portable device has a battery or the like incorporated as a driving source. It is essential for the head-mounted video display device to suppress a waste of power offered by the battery and extend an actual usable time.

When a battery is used as a power supply, voltage reportedly drops gradually. There is therefore a demand for an art of having viewers observe stable high-quality images despite a drop in supply voltage, by adopting a simple and inexpensive configuration.

The present invention attempts to break through the foregoing situation. An object of the present invention is to provide a control unit for head-mounted image display devices capable of effectively supplying power consumption without requiring complex manipulations.

### Disclosure of Invention

For accomplishing the above object, according to the first aspect of the present invention, there is provided a control unit for head-mounted image display devices including a video signal detecting means and a power control means. The video signal detecting means detects whether a video signal has been received. The power control means controls a power supply according to the result of the detection performed by the video signal detecting means.

Moreover, in accordance with the second aspect of the present invention, there is provided a control unit for head-mounted image display devices having the same components as those of the control unit in accordance with the first aspect. If it is detected that a video signal has been received, the power control means delivers power to circuits incorporated in a head-mounted image display device. If it is not detected that the video signal has been received, delivery of power to the circuits incorporated in the head-mounted image display device is discontinued or suppressed.

According to the third aspect of the present invention, there is provided a control unit for head-mounted image display devices having, in addition to the same components as those of the control unit in accordance with the first aspect, a glowing illumination circuit. The glowing illumination circuit applies voltage to an illuminating means, which illuminates a display module that renders images, so as to cause the illuminating means to glow. If it is detected that a video signal has been received, the power control means delivers power to the glowing illumination circuit. If it is not detected that the video signal has been received, the power control means discontinues or suppresses delivery of power to the glowing illumination circuit.

According to the fourth aspect of the present invention, there is provided a control unit for head-mounted image display devices having, in addition to the same components as those of the control unit in accordance with the first aspect, a glowing pulse adjusting means, and a glowing illumination circuit. Herein, the glowing pulse adjusting means always monitors voltage that is induced by a power supply and delivered from the power control means. If the voltage is high, the glowing pulse adjusting means produces a pulsating signal of short pulse duration. If the voltage is low, the flashlight pulse adjusting means produces a pulsating signal of long pulse duration. The glowing illumination circuit receives supply voltage from the power control means, boosts the supply voltage, and applies the resultant voltage to an illuminating means that illuminates a display module which renders images. If the pulse duration of a pulsating signal produced by the glowing pulse adjusting means is short, the glowing illumination circuit boosts the supply voltage a little. If the pulse duration of the pulsating signal is long, the glowing illumination circuit boosts the supply voltage largely. The glowing illumination circuit thus applies substantially constant voltage to the illuminating means.

According to the fifth aspect of the present invention, there is provided a control unit for head-mounted image display devices having the same components as those of the control unit in accordance with the fourth aspect. Herein, the glowing pulse adjusting means produces a pulsating signal of long pulse duration for a predetermined period after the power supply is turned on.

According to the sixth aspect of the present invention, there is provided a control unit for head-mounted image display devices having, in addition to the same components as those of the control unit in accordance with the first aspect, a detecting means. Herein, the detecting means detects connection of a main body of a head-mounted image display device. The main body of the head-mounted image display device consists mainly of a display module that renders images, and an illuminating means that illuminates the display module. When the detecting means fails to detect connection of the main body, the power control means automatically discontinues delivery of power to the circuits incorporated in the head-mounted image display device.

According to the seventh aspect of the present invention, there is provided a control unit for head-mounted image display devices having, in addition to the same components as those of the control unit in accordance with the first aspect, a mode switching means and a control means. The mode switching means switches modes in which images are displayed. When the mode switching means switches modes, the control means controls at least one of voltage to be applied to the illuminating means and a driving signal to be transferred to the display module for a predetermined time until an image displayed is stabilized in a selected mode. This is intended to prevent viewing of an unstable image.

According to the eighth aspect of the present invention, there is provided a control unit for head-mounted image display devices having the same components as those of the control unit in accordance with the seventh aspect. Herein, when the mode switching means switches modes, the control means deadens voice for the predetermined time.

According to the ninth aspect of the present invention, there is provided a control unit for head-mounted image display devices including a detecting means and a power control means. The detecting means detects connection of a main body of a head-mounted image display device. The head-mounted image display device consists mainly of a display module that renders images and an illuminating means that illuminates the display module. When the detecting means fails to detect connection of the main body, the power control means controls a power supply so as to automatically discontinue delivery of power to circuits incorporated in the head-mounted image display device.

According to the tenth aspect of the present invention, there is provided a control unit for head-mounted image display devices including a mode switching means and a control means. The mode switching means switches modes in which images are displayed. When the mode switching means switches modes, the control means controls at least one of voltage to be applied to an illuminating means and a driving signal to be transferred to a display module for a predetermined time until an image displayed is stabilized in a selected mode. This is intended to prevent viewing of an unstable image.

According to the eleventh aspect of the present invention, there is provided a control unit for head-mounted image display devices having the same components as those of the control unit in accordance with the tenth aspect of the present invention. Herein, when the mode switching means switches modes, the control means deadens voice for the predetermined time.

### Brief Description of the Drawings

Fig. 1 is a perspective view showing a head-mounted image display device to which an embodiment of the present invention is adapted and which is connected to a DVD player;
Fig. 2 is a longitudinal sectional view showing electric circuit boards incorporated in a control unit in accordance with the embodiment;
Fig. 3 is a cross sectional view showing the electric circuit boards incorporated in the control unit in accordance with the embodiment;
Fig. 4 is a plan view showing a plurality of electric circuit boards employed in the embodiment;
Fig. 5 is a plan view showing an arrangement of switches in the distal part of the control unit in accordance with the embodiment;
Fig. 6 is a sectional view showing a dial opening and its surroundings of an upper housing member that is molded using dies and that is employed in the embodiment;
Fig. 7 is a sectional view showing the positional relationship among an operator panel, a power button, and a mode button employed in the embodiment;
Fig. 8 is a block diagram showing mainly the electric configuration of a head-mounted image display device to which the embodiment is adapted and which is connected to a DVD player;
Fig. 9 is a circuit diagram showing an example of an emission pulse adjustment unit employed in the embodiment;
Fig. 10 is a circuit diagram showing another example of the emission pulse adjustment unit employed in the embodiment;
Fig. 11 is a circuit diagram showing still another example of the emission pulse adjustment unit employed in the embodiment;
Fig. 12 is a block diagram showing an example of a configuration to detect whether goggles are connected to the control unit in accordance with the embodiment;
Fig. 13 is a block diagram showing another example of the configuration to detect whether the goggles are connected to the control unit in accordance with the embodiment;
Fig. 14 is a timing chart showing the relationship between the charged state of a capacitor, which is included in an emission pulse adjustment unit having the circuitry shown in Fig. 11, and the pulse duration established after a power supply is turned on;
Fig. 15 is a flowchart describing a part of operations exerted by a head-mounted video image device to which the embodiment is adapted; and
Fig. 16 is a flowchart describing another part of the operations exerted by a head-mounted video image device to which the embodiment is adapted.

### Best Mode for Carrying Out the Invention

Referring to the drawings, an embodiment of the present invention will be described below.

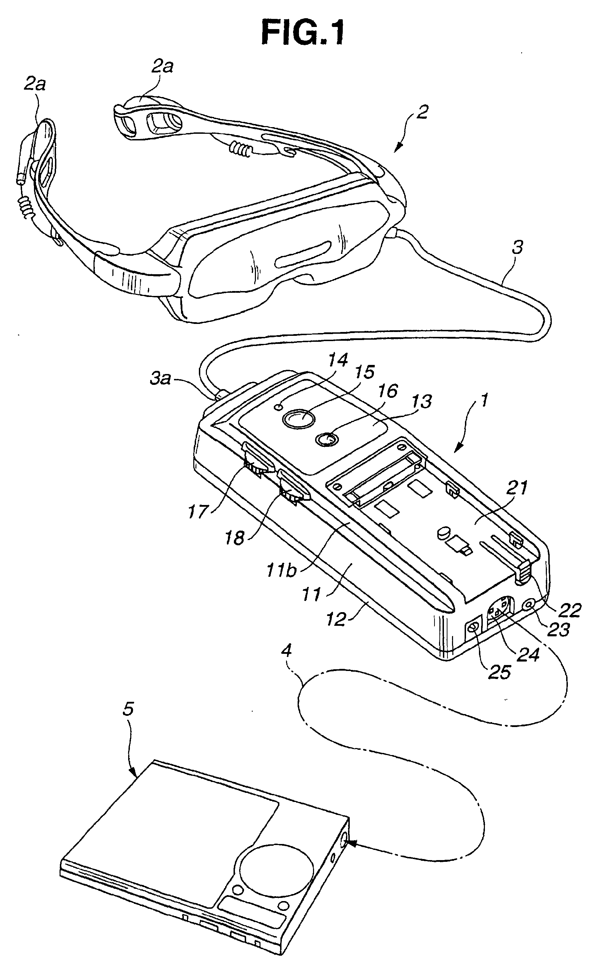

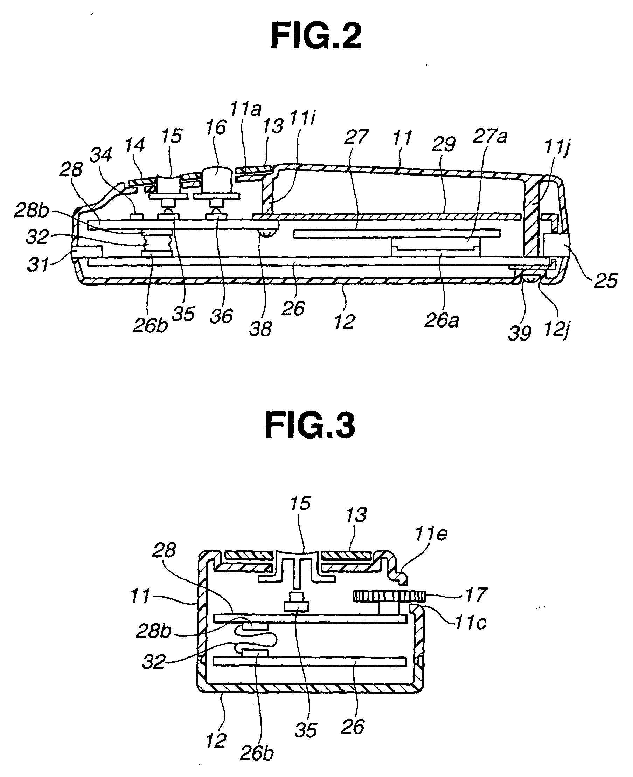

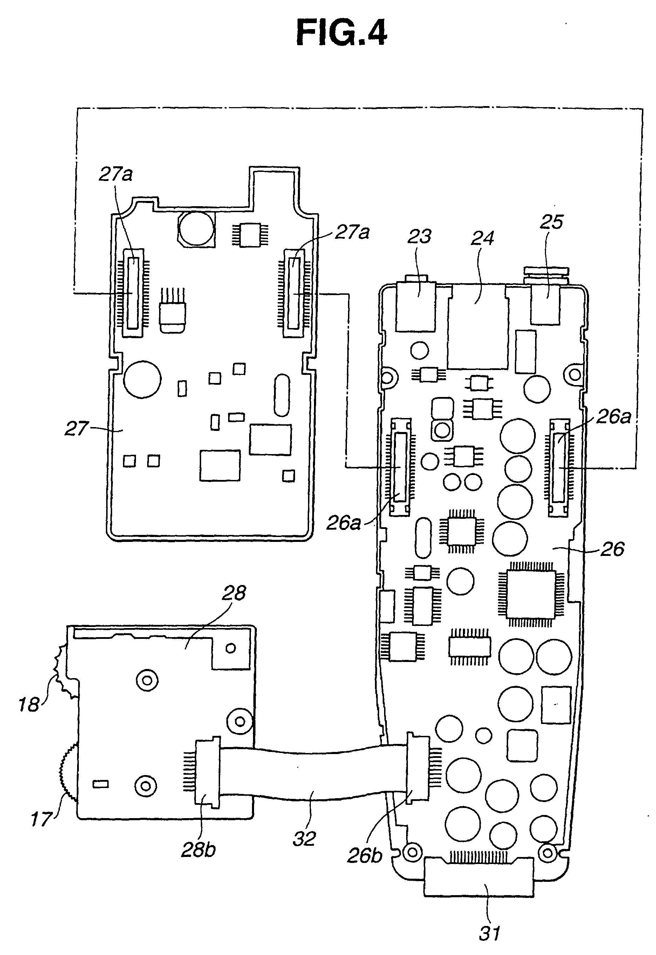

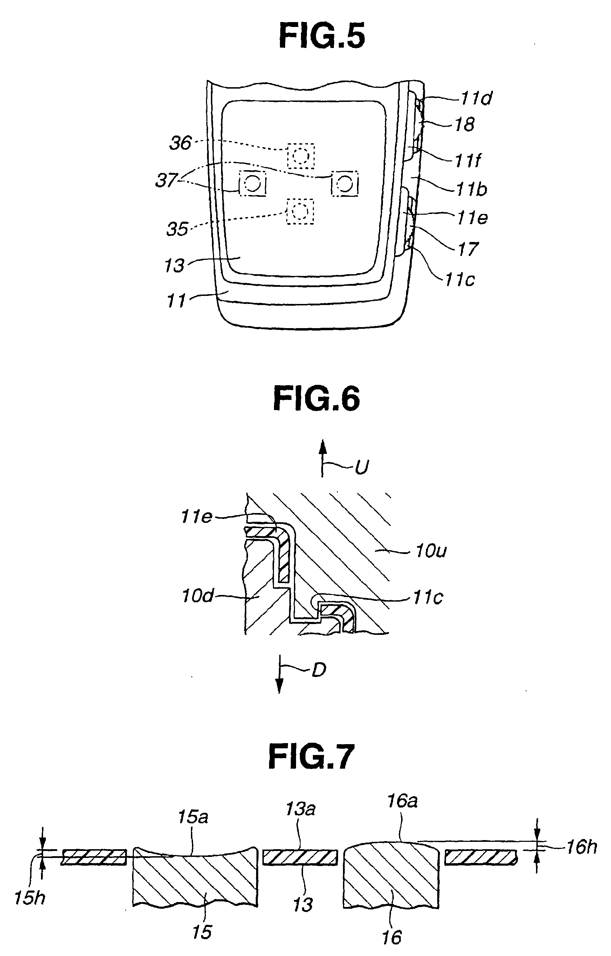

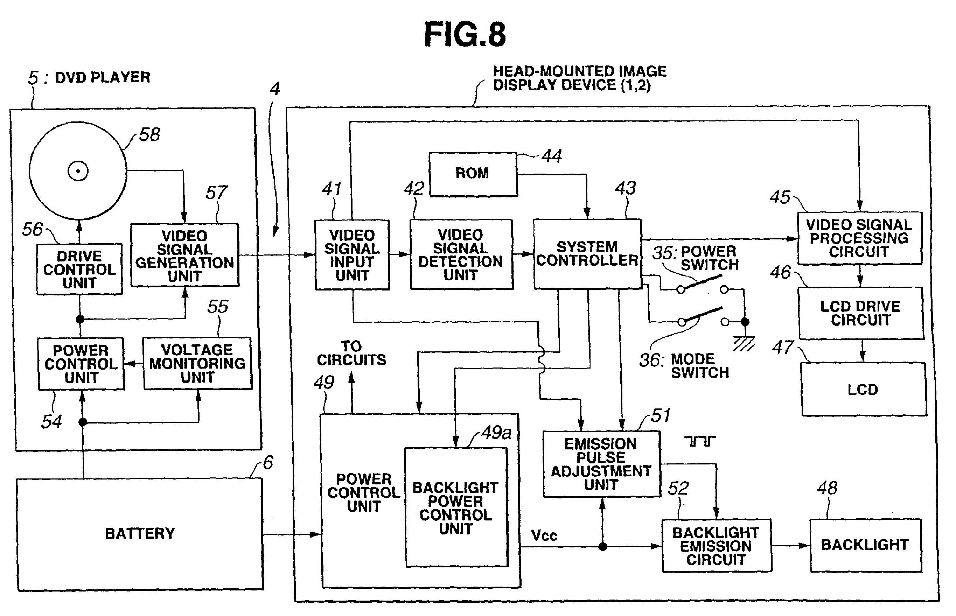

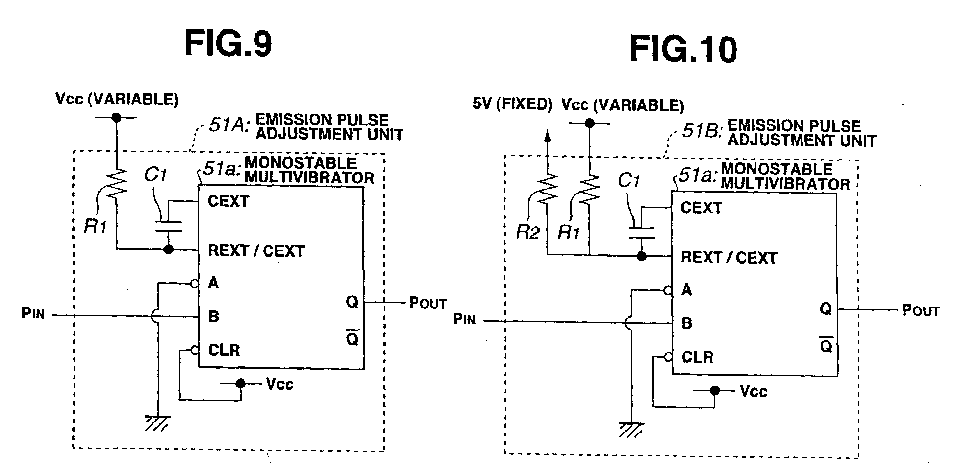

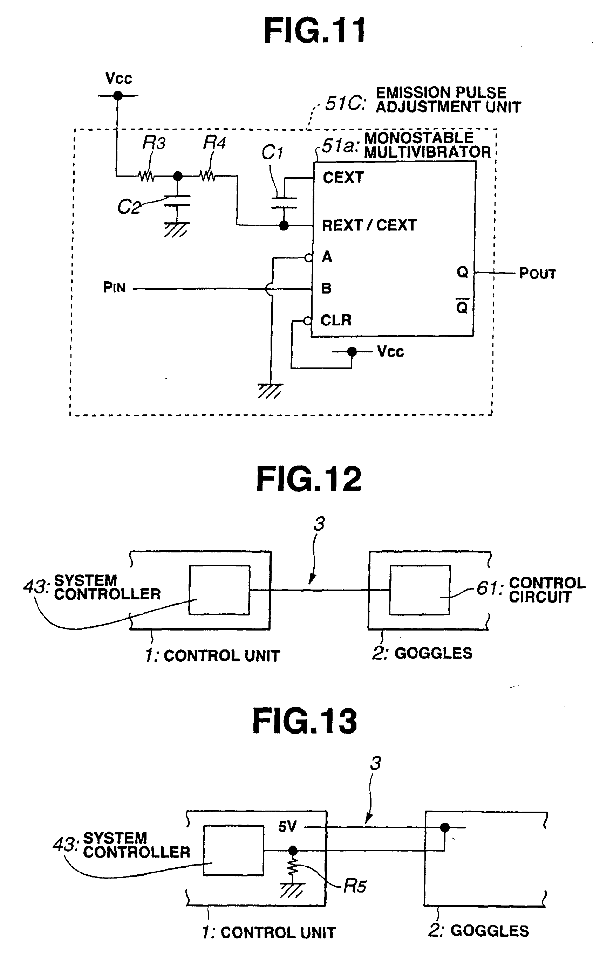

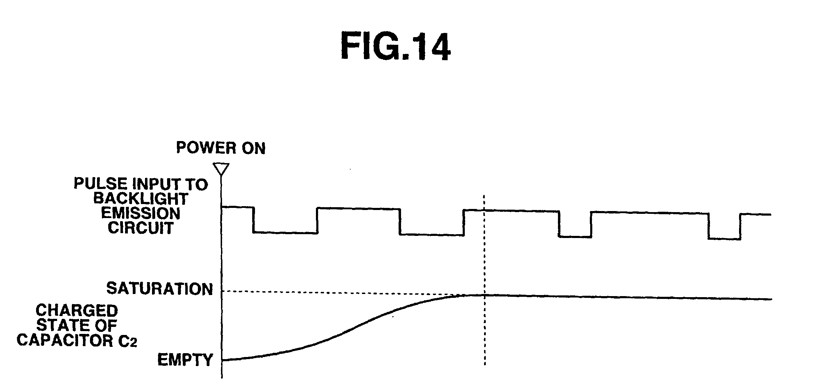

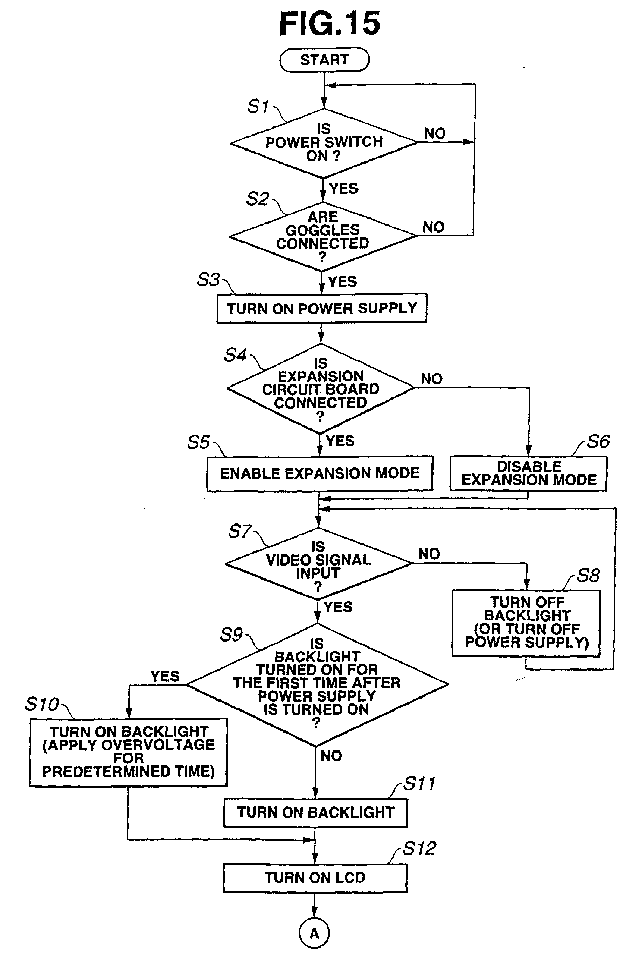

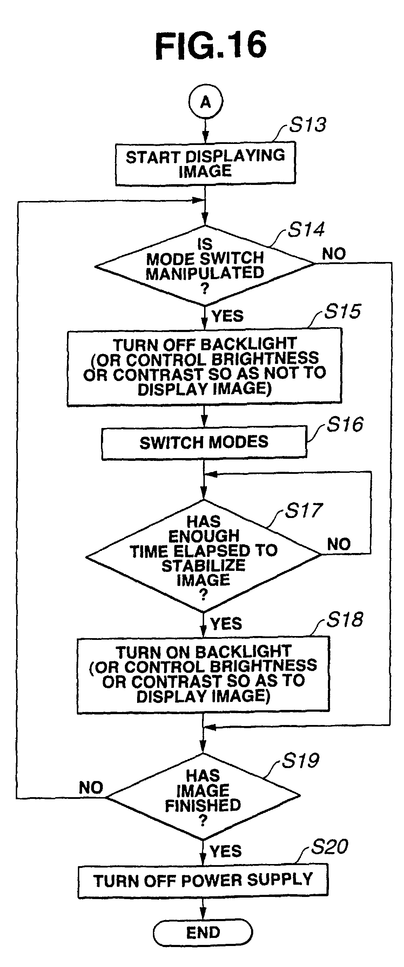

Fig. 1 to Fig. 16 are concerned with an embodiment of the present invention. Fig. 1 is a perspective view showing a head-mounted image display device connected to a DVD player. Fig. 2 is a longitudinal sectional view showing electric circuit boards incorporated in a control unit. Fig. 3 is a cross-sectional view showing the electric circuit boards incorporated in the control unit. Fig. 4 is a plan view showing a plurality of electric circuit boards. Fig. 5 is a plan view showing an arrangement of switches in the distal part of the control unit. Fig. 6 is a sectional view showing a dial opening and its surroundings of an upper housing member that is molded using dies. Fig. 7 is a sectional view showing the positional relationship among an operator panel, a power button, and a mode button. Fig. 8 is a block diagram showing mainly the electric configuration of a head-mounted image display device connected to a DVD player. Fig. 9 is a circuit diagram showing an example of an emission pulse adjustment unit. Fig. 10 is a circuit diagram showing another example of the emission pulse adjustment unit. Fig. 11 is a circuit diagram showing still another example of the emission pulse adjustment unit. Fig. 12 is a block diagram showing an example of a configuration to detect whether the control unit is connected to goggles. Fig. 13 is a block diagram showing another example of the configuration to detect whether the control unit is connected to the goggles. Fig. 14 is a timing chart showing the relationship between the charged state of a capacitor, which is included in the emission pulse adjustment unit having the circuitry shown in Fig. 11, and the pulse duration which is established after a power supply is turned on. Fig. 15 is a flowchart describing a part of operations exerted by the head-mounted image display device. Fig. 16 is a flowchart describing another part of operations exerted by the head-mounted image display device.

As shown in Fig. 1, the head-mounted image display device consists mainly of a main body (hereinafter, goggles) 2 and a control unit (hereinafter, control unit) 1. The goggles 2 are mounted on a user's head and used to view images and hear voice. The control unit 1 is included separately from the goggles 2 and connected to the goggles 2 over a connection code 3. The control unit 1 is used to adjust the brightness or contrast of an image displayed by the goggles and the volume offered thereby.

Moreover, a video source such as a DVD player 5, for example, the one shown in Fig. 1, any other television tuner, or a videocassette recorder can be connected to the control unit 1 included in the head-mounted image display device. The control unit 1 can receive an image and voice from the DVD player 5 and transfer them to the goggles 2.

Circuit boards or the like and a prism or the like are, as shown in Fig. 8 that will be referred to later, incorporated in the goggles 2. A transmissive LCD 47, a backlight 48, and a control circuit 61 (see Fig. 12) are mounted on the circuit boards. The transmissive LCD 47 is a display module on which images are displayed. The backlight 48 serves as an illuminating means that illuminates the LCD 47. The control circuit 61 drives the LCD 47 and the backlight 48. The prism is used to project an image, which is displayed on the LCD 47 illuminated by the backlight 48, on user's eyeballs. The goggles 2 further include a pair of right and left earphones 2a used to hear voice.

Moreover, the control unit 1 is connected to the goggles 2 with a connector 3a, which is fixed to the distal end of the connection code 3 extended from the goggles 2, joined to a connector receptacle 31 (see Fig. 2 and Fig. 4 etc.). The connector receptacle 31 is formed in the distal part of the control unit 1.

The control unit 1 has its housing made by combining an upper housing member 11 and a lower housing member 12. A plurality of electric circuit boards (see Fig. 2, Fig. 3, and Fig. 4 etc.) that will be described later is incorporated in the control unit 1.

A battery mount 21, on which a battery or the like is mounted after having been slid, is formed on the top of the control unit 1. Once a battery is mounted on the battery mount 21, power offered by the battery is supplied to a power control unit 49 (see Fig. 8) formed on a built-in electric circuit board.

Moreover, a battery dismounting knob 22 used to dismount a mounted battery is located on the right edge in the longitudinal direction of the battery mount 21.

An AV input terminal 23 is located below and near the battery dismounting knob 22 on the end surface in the longitudinal direction of the control unit 1. An S video input terminal 24 is located by the left side of the AV input terminal 23. An AC input terminal 25 used to connect an AC adapter that is not shown is located by the left side of the S video input terminal 24.

An operator panel 13 serving as a part of a housing member is fitted in a concave part 11a of the upper housing member 11, thus forming the top of the distal part of the control unit 1. The operator panel 13 has a plurality of holes bored therein. A power button 15 and a mode button 16 are exposed on the operator panel 13 so that they can be manipulated. The power button 15 is an operating member used to turn on or off the power supply of the head-mounted image display device, and the mode button 16 is an operating member used to designate a mode in which an image is displayed on a screen. The operator panel 13 has a power lamp window 14 formed therein distally to the power button 15. When the power supply is turned on, the power lamp window 14 is lit in, for example, green in order to inform the fact that the power supply is turned on.

A step portion 11b is formed on the upper part of one side surface of the upper housing member 11. A volume control dial 17 and a jog dial 18 are located in the distal part of the step portion 11b. The volume control dial 17 is an operating member used to adjust a volume. The jog dial 18 is an operating member used to designate a display mode or a user-defined mode as a menu item.

The jog dial 18 is a dial member that is rotated in order to select a menu item and jogged in order to finalize the selection.

Display modes to be selected using the jog dial 18 are modes to change aspect ratios of screen images, for example, that are described later. User-defined modes are modes each of which is defined by a user according to the user's likes. Specifically, the brightness or contrast of an image to be displayed on the LCD 47 illuminated by the backlight 48, a display mode, and a tone offered by the earphones 2a are designated as parameters of a user-defined mode according to the user's likes. A user designates the parameters by manipulating the jog dial 18 while viewing a setting screen image displayed on the LCD 47.

The control unit 1 is, as mentioned above, connected to the DVD player 5 using a signal cable 4 or the like. For example, the S video input terminal 24 is connected to an S video output terminal of the DVD player 5, whereby an S video signal is received from the DVD player. A voice signal is received from the DVD player through the AV input terminal 23. Incidentally, both the video signal and voice signal may be received only through the AV input terminal 23.

On the other hand, the DVD player 5 receives power from a battery 6 connected to the DVD player 5 as shown in Fig. 8 that will be referred to later. Power may be supplied from the battery 6, which is connected to the DVD player 5, to the head-mounted image display device.

Therefore, in order to supply power to the head-mounted image display device, a battery may be mounted on the battery mount 21 or an AC adapter may be connected through the AC input terminal 25. Otherwise, the battery 6 connected to the DVD player 5 may be connected to the head-mounted image display device through a contact formed on the battery mount 21.

Next, the arrangement of electric circuit boards in the control unit 1 will be described with reference to Fig. 2, Fig. 3, and Fig. 4.

The electric circuit boards incorporated in the control unit 1 include a main circuit board 26 and an operating circuit board 28. The power control unit 49, a system controller 43 (see Fig. 8), and other circuit elements are mounted on the main circuit board 26. The volume control dial 17, the jog dial 18, a power switch 35, a mode switch 36, and an LED 34 are mounted on the operating circuit board 28. The states of the power switch 35 are switched by pressing the power button 15. The states of the mode switch 36 are switched by pressing the mode button 16 in order to switch modes. The LED 34 emits light to the power lamp window 14. If necessary, an expansion circuit board 27 is incorporated in the control unit 1 in order to add additional features to the control unit 1. The expansion circuit board 27 can be removed freely.

The main circuit board 26 is an electric circuit board mounting circuit elements that realize the basic features of the head-mounted image display device, such as, the power control unit 49, a video signal input unit 41, the system controller 43 that are shown in Fig. 8. The AV input terminal 23, S video input terminal 24, and AC input terminal 25 are mounted on the main circuit board 26. Moreover, the connector receptacle 31 to which the connector 3a is joined is mounted on the main circuit board 26. Moreover, a pair of connectors 26a, for example, that links the main circuit board 26 and the expansion circuit board 27, and a connector 26b that links the main circuit board 26 and the operating circuit board 28 are mounted on the main circuit board 26.

The display modes that can be realized with the main circuit board 26 include a normal mode and a wide mode. The normal mode is a mode in which a standard image is displayed within a screen frame of an aspect ratio 4:3. The wide mode is a mode in which a wide screen frame whose height is equal to the height of the normal screen frame and whose width is longer than the width thereof is presented.

The expansion circuit board 29 is an electric circuit board used to expand the basic features realized with the main circuit board 26. Circuit elements responsible for image processing or voice processing are mounted on the expansion circuit board 29. Moreover, a pair of connectors 27a that is joined to the pair of connectors 26a is mounted on the expansion circuit board 29.

By including the expansion circuit board 29, a feature concerning images and a feature concerning voice can be expanded. For example, expansion features concerning images are provided as additional display modes. The additional display modes include, for example, a zoom mode and a cinema zoom mode. The zoom mode is a mode in which an image is enlarged vertically and laterally with the width thereof made slightly larger than the height thereof. The cinema zoom mode is suitable for display of images of a CinemaScope size or a Vista Vision size, that is, laterally long images that occupy the entire width of a screen frame.

The foregoing display modes are cyclically switched in the order of, for example, the normal mode, wide mode, zoom mode, and cinema zoom mode, with every press of the mode button 16.

Furthermore, the operating circuit board 28 is an electric circuit board on which switches used to operate the head-mounted image display device are mounted. As mentioned above, the LED 34, power switch 35, and mode switch 36 are mounted on the operating circuit board 28. Moreover, the volume control dial 17 and jog dial 18 are mounted on the operating circuit board 28. Furthermore, a connector 28b to be connected to the connector 26b on the main circuit board 26 is mounted on the operating circuit board 28. The connector 26b and connector 28b are connected to each other over, for example, a flat cable 32.

A shield plate 29 that is, for example, a metallic plate is placed inside the housing so that it can cover the top and side surface of the expansion circuit board 27, which is one of the three electric circuit boards, and the side surface of a portion of the main circuit board 26 opposed to the expansion circuit board 27.

The shield plate 29 has the distal end thereof fixed to a fixture 11i, which juts down from the inner surface of the upper housing member 11, together with an end of the operating circuit board 28 by tightening a screw 38. Moreover, the lower end of the shield plate 29 is sandwiched together with the main circuit board 26 between a fixture 11j and a screw stopper boss 12j by tightening a screw 39. The fixture 11j juts down from the inner surface of the upper housing member 11, and the screw stopper boss 12j juts up from the bottom of the lower housing member 12.

The shield plate 29 is thus clamped together with the upper housing member 11 and lower housing member 12, whereby the strength of the control unit 1 is improved.

As mentioned above, the expansion circuit board 27 has circuit elements or the like, which are responsible for complex image processing, mounted thereon. The circuit elements often process image data at a high speed synchronously with a relatively high-frequency clock. Therefore, the expansion circuit board 27 is relatively likely to radiate noise or the like. The expansion circuit board 27 is therefore covered with the shield plate 29 in order to prevent radiation of noise to outside.

Moreover, the operating circuit board 28 is constituted of, for example, a multilayer substrate that effectively shields noise. When the operating circuit board 28 and shield plate 29 are linked to substantially cover the majority of the surface of the main circuit board 26, noise radiated from the main circuit board 26 can be shut out effectively.

As mentioned above, a plurality of electric circuit boards is employed. Circuit elements that are likely to produce noise are mounted on the expansion circuit board 27, and the expansion circuit board 27 is covered with the shield plate 29. The main circuit board 26 is covered by linking the shield plate 29 and operating circuit board 28. Consequently, noise radiated from the expansion circuit board 27 and main circuit board 26 is substantially suppressed.

Furthermore, the shield plate 29 is made of a metal as mentioned above, whereby a ground on the operating circuit board 28 is connected to a ground on the main circuit board 26.

Moreover, the operating circuit board 28 is included independently of the main circuit board 26. This provides the merit that when a product is upgraded in the future, for example, when switches 37 or the like other than the power switch 35 and mode switch 36 are added as shown in Fig. 5, the operating circuit board 28 alone should merely be modified. At this time, the design of the main circuit board 26 need not be changed.

Likewise, the expansion circuit board 27 is included independently of the main circuit board 26. This provides the merit that when a product is upgraded in the future, that is, when another features are added to the product, the expansion circuit board 27 alone should merely be modified, but the design of the main circuit board 26 need not be changed.

Next, referring to Fig. 6 and Fig. 5 that has been referred to previously or the like, how to mold dial openings 11c and lid will be described below. The volume control dial 17 and jog dial 18 are exposed on the upper housing member 11 through the dial openings 11c and 11d so that the dials can be manipulated.

The dial type operating members including the volume control dial 17 and jog dial 18 are preferably exposed on the side surface of the housing so that they can be manipulated readily.

Generally, if the openings through which the dial type operating members are exposed are formed on, for example, a substantially vertical side surface of the upper housing member, the upper housing member must be molded by moving dies in lateral directions. However, the upper housing member 11 and lower housing member 12 that constitute the housing of the control unit are each formed by moving dies in opposite directions. As long as this manufacturing process is adopted, dies become complex and costs of manufacturing increase.

A corner of the upper housing member is utilized so that the dial openings 11c and 11d can be molded by moving dies in vertical directions alone.

Specifically, the upper housing member 11 has, as mentioned above, the step portion 11b formed as an upper part of one side surface thereof. The dial openings 11c and 11d are formed at the corner created between the step portion 11b and the side surface. Eaves portions 11e and 11f for sliding contact are formed above the dial openings 11c and 11d respectively.

When the operating circuit board 28 is placed at a predetermined position in the upper housing member 11, the volume control dial 17 is partly exposed through the dial opening 11c so that it can be manipulated. The jog dial 18 is partly exposed through the dial opening 11d so that it can be manipulated.

Moreover, when the volume control dial 17 or jog dial 18 is rotated with a finger or the like, the fingertip is brought into contact with the eaves portion 11e or 11f for sliding contact. The finger then exerts appropriate force in pressing the volume control dial 17 or jog dial 18. Thus, the eaves portions 11e and 11f for sliding contact assist a user in manipulating the dials in a preferred manner.

The dial openings 11c and 11d are molded by, as shown in Fig. 6, moving an upper die 10u upwards as indicated with arrow U and a lower die 10d downwards as indicated with arrow D. At this time, the dies need not be moved in lateral directions.

Next, the power button 15 and mode button 16 exposed on the operator panel 13 will be described below.

The power button 15 and mode button 16 are, for example, formed as parts of a single button member.

Specifically, the button member is molded using a resin or any other material. One end of the button member is fixed to the inner surface of the upper housing member 11. The power button 15 and mode button 16 are molded as integral parts at the distal ends of two elastic arms extending from the fixed portion of the button member.

The fixed portion of the button member is fixed to the inner surface of the upper housing member 11 by, for example, tightening a screw, whereby the button member is placed at a predetermined position below the operator panel 13.

The positional relationship in the foregoing state is shown in Fig. 7.

Specifically, the power button 15 has a pressing surface 15a thereof exposed to outside and formed to be concave. The mode button 16 has a pressing surface 16a thereof exposed to outside and formed to be convex.

The bottom of the pressing surface 15a of the power button 15 is located at a position lower than the position of the surface 13a of the operator panel 13 by a height 15h shown in Fig. 7. In order to switch the states of the power switch 35 mounted on the operating circuit board 28, the pressing surface 15a must be sunk deeper than the surface 13a of the operator panel 13.

The apex of the pressing surface 16a of the mode button 16 is located at a position higher than the position of the surface 13a of the operator panel 13 by a height 16h shown in Fig. 7. The pressing surface 16a of the mode button 16 need not be sunk deeper than the surface 13a of the operator panel 13, but the states of the mode switch 36 mounted on the operating circuit board 28 can be switched.

The power button 15 is used to turn on or off the power supply, while the mode button 16 that is relatively frequently used. Therefore, the power button 15 must be prevented from being accidentally pressed to turn on or off the power supply. In other words, the power button 15 is structured as mentioned above for fear that the power supply should be turned off abruptly and unintentionally during use of the display device, or the power supply may be turned on to consume power offered by a battery during transportation or an unused time of the display device.

Furthermore, the power button 15 is used to cancel a password with which a user is identified. When the power button 15 is held down for, for example, continuously 5 sec or more, a memory area in which the password is stored is initialized, and the password is cancelled.

As mentioned above, the power button 15 that is concave is used to designate a feature that must be activated by decisive manipulation. The head-mounted image display device is designed to be lightweight and readily usable while being carried. At the same time, the maneuverability of the control unit, while being carried, is also taken into consideration.

Next, the electric configuration of the head-mounted image display device to which the DVD player 5 is connected as a video source will be mainly described with reference to Fig. 8.

As mentioned above, the DVD player 5 is designed, for example, for portable use, and the battery 6 that supplies power to the DVD player 5 when the DVD player 5 is being carried can be connected to the DVD player 5.

Power supplied from the battery 6 is fed to a power control unit 54 and then delivered to circuits incorporated in the DVD player 5. At the same time, the power is fed to a voltage monitoring unit 55, and voltage induced by the battery is detected thereby. When the voltage monitoring unit 55 detects that the voltage induced by the battery 6 falls below a predetermined voltage level, delivery of power from the power control unit 54 to the circuits is stopped in order to prevent deterioration of the battery 6 due to over-discharge.

Consequently, when the voltage induced by the battery 6 drops, a video signal sent from the DVD player 5 is not transferred automatically. When transfer of the video signal is stopped because of the drop in the voltage induced by the battery 6, an end signal indicating the fact may be transmitted in advance to the head-mounted image display device.

Power delivered from the power control unit 54 is delivered to a drive control unit 56 and a video signal generation unit 57. The drive control unit 56 drives and rotates a loaded DVD disk (DVD-ROM or DVD-RAM) 58, or moves a head, which reads recorded information, to a predetermined position on the DVD disk 58. The video signal generation unit 57 generates a video signal according to the information read by the head.

The thus generated video signal is transmitted to a video signal input unit 41 incorporated in the head-mounted image display device, which consists mainly of the control unit 1 and goggles 2, over the signal cable 4 that is an S video cable or an AV cable or the like.

Whether the video signal input unit 41 has received a video signal is detected by a video signal detection unit 42 that is a video signal detecting means. The result of the detection is transferred to a system controller 43.

The system controller 43 serves as a control means and a detecting means alike. Specifically, based on whether the video signal has been received or the state of the power switch 35 or mode switch 36, the system controller 43 controls the circuits incorporated in the head-mounted image display device in response to instructions described in a processing program stored in a ROM 44. The system controller 43 has a built-in memory in which the processing program read from the ROM 44 and data are stored. Moreover, the aforesaid password is stored therein.

The video signal received by the video signal input unit 41 is transferred to a video signal processing circuit 45. The video signal is then subjected to various kinds of signal processing including data conversion into a data structure dependent on a selected display mode. The display mode is instructed by the system controller 43 that has detected the state of the mode switch 36.

The video signal sent from the video signal processing circuit 45 is transferred to an LCD drive circuit 46 that produces an LCD driving signal. An image is displayed on the LCD 47 having received the LCD driving signal.

A voice signal is transmitted from the DVD player 5 over the AV cable or the like, though it is not illustrated. After subjected to noise elimination and amplification, the voice signal is transferred to the earphones 2a. Consequently, voice is generated.

Furthermore, power supplied from the battery 6 is fed to a power control unit 49 that is a power control means. The power control unit 49 delivers the power to circuits incorporated in the head-mounted image display device under the control of the system controller 43.

A backlight power control unit 49a included in the power control unit 49 is a circuit for delivering power to the backlight 48 that illuminates the LCD 47. The backlight power control unit 49a is also controlled by the system controller 43.

Supply voltage Vcc delivered from the backlight power control unit 49a is applied to a backlight emission circuit 52 that is a glowing illumination circuit for applying high voltage to the backlight 48 so as to cause the backlight 48 to glow. The supply voltage is also applied to an emission pulse adjustment unit 51 that is a glowing pulse adjusting means.

A horizontal synchronizing signal contained in the video signal sent from the video signal input unit 41 is transferred to the emission pulse adjustment unit 51. The emission pulse adjustment unit 51 monitors the supply voltage Vcc delivered from the backlight power control unit 49a all the time, adjusts the pulse duration of the voltage according to the voltage level, and applies the resultant voltage to the backlight emission circuit 52.

The backlight emission circuit 52 then applies the high voltage generated in accordance with the input pulse duration to the backlight 48 so as to cause the backlight 48 to glow. Specifically, when the pulse duration of the received voltage is short, the backlight emission circuit 52 boosts the voltage a little to produce high voltage. When the pulse duration of the received voltage is long, the backlight emission circuit 52 boosts the voltage largely to produce high voltage.

Next, examples of the circuitry of the emission pulse adjustment unit 51 will be described with reference to Fig. 9 and Fig. 10.

Fig. 9 shows an emission pulse adjustment unit 51A having as an example of the circuitry.

The emission pulse adjustment unit 51A is a circuit including a monostable multivibrator 51a.

Specifically, the supply voltage Vcc is applied to a REXT/CEXT terminal via a resistor R1. The REXT/CEXT terminal is connected to a CEXT terminal via a capacitor C1. Moreover, an A terminal is grounded. A horizontal sync signal sent from the video signal input unit 41 is applied as an input pulse Pin to a B terminal. A CLR terminal is connected to a supply voltage line Vcc. An output pulse Pout having the pulse duration thereof adjusted is transmitted through a Q terminal. An output that is the reverse of the output pulse Pout is transmitted through a Q/ (bar) terminal.

Owing to the above circuitry, the pulse duration of the output pulse Pout is determined until the capacitor C1 is charged to induce voltage of a certain level. The higher the supply voltage Vcc, the larger the current flowing through the resistor R1. Consequently, the time required to charge the capacitor C1 gets shorter, and the pulse duration of the output pulse Pout gets shorter. In contrast, the lower the supply voltage Vcc, the smaller the current flowing through the resistor R1. Consequently, the time required to charge the capacitor C1 gets longer, and the pulse duration of the output pulse Pout gets longer.

As mentioned above, when the pulse duration of supply voltage is short, the backlight emission circuit 52 boosts the voltage a little to produce high voltage. When the pulse duration thereof is long, the backlight emission circuit 52 boosts the voltage largely to produce high voltage. When the supply voltage Vcc is high, the backlight emission circuit 52 boosts the supply voltage a little. When the supply voltage Vcc is low, the backlight emission circuit 52 boosts the supply voltage largely.

Consequently, voltage applied to the backlight 48 remains nearly constant irrespective of the supply voltage Vcc. Consequently, even if the battery 6 has exhausted to induce voltage of a lower level, the backlight 48 is caused to glow with nearly constant luminance. Moreover, even when an AC adapter is used as a power supply of the head-mounted image display device, the AC adapter can be selected from among various types of AC adapters that induce various levels of voltage.

Fig. 10 shows an emission pulse adjustment unit 51B having another example of the circuitry.

The circuitry of the emission pulse adjustment unit 51B is nearly identical to that of the emission pulse adjustment unit 51A shown in Fig. 9. Another resistor R2 is connected in parallel with the resistor R1 in order to apply fixed voltage of, for example, 5 V.

Owing to the above circuitry, charge accumulated in the capacitor C1 is induced with the fixed voltage of 5 V. Therefore, a variation of the pulse duration of the output pulse Pout derived from a fluctuation in the supply voltage Vcc can be alleviated. The degree of alleviation can be adjusted by changing the resistance of the resistor R2 or changing the fixed voltage level.

Next, Fig. 11 shows an emission pulse adjustment unit 51C having still another example of the circuitry.

The emission pulse adjustment units 51A and 51B shown in Fig. 9 and Fig. 10 are intended to cope with a drop in the supply voltage Vcc attributable to exhaustion of the battery 6. In contrast, the emission pulse adjustment unit 51C having the circuitry shown in Fig. 11 is intended to improve the quickness of the backlight 48 in glowing for the first time after the power supply is turned on by pressing the power button 15.

Specifically, the emission pulse adjustment unit 51C has nearly the same circuitry as the emission pulse adjustment unit 51A shown in Fig. 9. However, two resistors R3 and R4 are connected in series with each other in place of the resistor R1. A capacitor C2 whose electric capacitance is larger than that of the capacitor C1 is connected between the resistors R3 and R4.

Owing to the above circuitry, when the power button 15 is pressed in order to turn on the power supply, a majority of current caused to flow by the supply voltage Vcc flows into the capacitor C2 via the resistor R3, and a minority thereof flows into the capacitor C1. Charge is therefore accumulated in the capacitor C1 slowly. Consequently, the output pulse Pout exhibits long pulse duration.

As shown in Fig. 14, the pulse duration of the output pulse Pout increases until the capacitor C2 is saturated. When the capacitor C2 is saturated, no current flows into the capacitor C2. Charge is therefore accumulated in the capacitor C1 as it normally is. Namely, the output pulse Pout of normal pulse duration is transferred.

Moreover, after the capacitor C1 is saturated, the resistors R3 and R4 fill the role of the resistor R1 shown in Fig. 9. Consequently, a drop in the supply voltage Vcc derived from exhaustion of the battery 6 can be coped with without the necessity of modifying the circuitry shown in Fig. 11.

Incidentally, the circuitry for applying fixed voltage via the resistor R2 as shown in Fig. 9B may be added to the circuitry shown in Fig. 11.

Referring to Fig. 12 and Fig. 13, a description will be made of a configuration that enables detection of whether the goggles 2 are connected to the control unit 1 and that saves power when the goggles 2 are not connected thereto.

Fig. 12 shows an example of the configuration to detect whether the goggles 2 are connected.

The system controller 43 mounted on the main circuit board 26 incorporated in the control unit 1 communicates with the control circuit 61 mounted on a circuit board incorporated in the goggles 2 over the connection cord 3. Consequently, if the system controller 43 fails to communicate with the control circuit 61, it can be judged that the goggles 2 are not connected to the control unit 1.

Next, Fig. 13 shows another example of the configuration to detect whether the goggles 2 are connected.

An input terminal of the system controller 43 is grounded via a resistor R5, and connected to the goggles 2. The control unit 1 applies fixed voltage of, for example, 5 V to the goggles 2.

A fixed voltage input terminal of the goggles 2 to which the fixed voltage of 5 V is applied is connected on a line led to the input terminal of the system controller 43.

Owing to the foregoing configuration, when the control unit 1 and goggles 2 are connected to each other, the input terminal of the system controller 43 is driven to 5 V (driven high). In contrast, when the control unit 1 and goggles 2 are not connected to each other, the input terminal of the system controller 43 is driven to the ground level (driven low).

The system controller 43 is constituted to judge whether the goggles 2 are connected by detecting the potential at the input terminal.

Referring to Fig. 15 and Fig. 16, actions performed in the head-mounted image display device will be described below.

First, a standby state is retained until the power button 15 is pressed in order to turn on the power switch 35 (step S1).

When the power switch 35 is turned on, it is judged, using the configuration described in conjunction with Fig. 12 or Fig. 13, whether the goggles 2 are connected to the control unit 1 (step S2). If the goggles 2 are not connected, no power is delivered to the circuits but control is returned to step S1 at which the standby state is retained until the power switch 35 is turned on. Thus, when the goggles 2 are not connected, a waste of power can be prevented.

If it is detected at step S2 that the goggles 2 are connected to the control unit 1, the system controller 43 controls the power control unit 49 so that the power control unit 49 will deliver power to the circuits in the head-mounted image display device (step S3).

Furthermore, whether the expansion circuit board 2 is connected to the main circuit board 26 is judged by causing the circuit boards to communicate with each other or using a mechanical facility or the like (step S4). If the circuit boards are connected to each other, an expansion mode realized with the expansion circuit board 27 is enabled (step S5). If the circuit boards are not connected to each other, the expansion mode is disabled (step S6).

As mentioned above, the processing program stored in the ROM 44 is the same one irrespective of whether the expansion circuit board 27 is included. Whether the expansion circuit board 27 is included is detected, and the contents of the processing program are modified based on the result of the detection. This enables exploitation of a sole processing program and leads to reduced costs.

Thereafter, it is judged whether the video signal input unit 41 has received a video signal from a video source such as the DVD player 5 (step S7). If the video signal has not been received, delivery of power from the backlight power control unit 49a is stopped under the control of the system controller 43 (step S8). Otherwise, if the video signal has not been received, delivery of power from the power control unit 49 to the circuits may be stopped in order to save power more thoroughly. In this case, control is returned to step S1, and a standby state is retained until the power switch 35 is turned on again.

If it is judged at step S7 that a video signal has been received, the process is branched depending on whether the backlight is turned on for the first time since the power switch 35 is turned on (step S9).

In other words, if the backlight is turned on for the first time, the backlight emission circuit 52 applies overvoltage to the backlight 48 owing to the configuration shown in Fig. 11 for a predetermined time until the capacitor C2 is saturated (step S10).

If it is not the first time that the backlight is turned on, the capacitor C2 is already saturated. Consequently, the backlight emission circuit 52 applies voltage of a normal level to the backlight 48 (step S11).

As well as the step S10 or S11 is performed, the video signal processing circuit 45 processes the video signal sent from the video signal input unit 4. Thereafter, the LCD drive circuit 46 drives the LCD 47 (step S12), and image display is started (step S13).

Then, the system controller 43 is constituted to judge whether the display modes are switched by detecting the state of the mode switch 36 (step S14). If the display modes are not switched, control is passed to step S19.

Although, when the display modes are switched, an operating screen image is displayed on the LCD 47, the contents of the screen image are modified based on a flag or the like that is set depending on whether it is judged at step S5 or S6 that the expansion circuit board 27 is connected. Specifically, if the connection circuit board 27 is connected, a display mode or the like realized with the expansion circuit board 27 can be selected.

If the display modes are switched, the system controller 43 stops delivery of power to the backlight 48 by controlling the backlight power control unit 49a. The backlight 48 is then turned off in order to disable viewing of an image (step S15).

Incidentally, instead of merely turning off the backlight 48, or as well as turning off the backlight 48, the brightness and contrast offered by the LCD 47 may be controlled in order to disable viewing of an image on the LCD 47.

When the display modes are switched, a displayed image may be distorted temporarily. Therefore, image display is suspended for fear that the sense of satisfaction to be given to a user may be impaired by the image.

The system controller 43 controls the video signal processing circuit 45 so that signal processing will be performed in order to display an image in a designated display mode (step S16).

A standby state is then set in order to wait for elapse of a time that is long enough to stabilize an image (step S17). The time that elapses until an image is stabilized is dependent on from what mode a transition is made to what mode. Therefore, an associated one of the time values that are stored in advance in the ROM 44 is read and set as the standby time.

After the predetermined time elapses, when an image is stabilized, the backlight 48 is turned on or the brightness or contrast offered by the LCD 47 is controlled. Consequently, viewing an image on the LCD 47 is enabled again (step S18).

Thereafter, it is judged whether all images have been displayed (step S19). If all images are not displayed, control is returned to step S14 and image display is continued. If all images have been displayed, the power control unit 49 is controlled in order to turn off the power supply and the processing sequence is terminated.

As mentioned above, the transmissive LCD 4 employing the backlight 48 as an illuminating means is taken for an instance. The present invention is not limited to this type of LCD. For example, the present invention may be applied to a reflective LCD employing a front light as an illuminating means. Specifically, a reflective LCD, a front light power control unit, a front light emission circuit, and a front light are substituted for the LCD 47, backlight power control unit 49a, backlight emission circuit 52, and backlight 48 shown in Fig. 8. A reflective LCD type head-mounted image display device may thus be constructed, and the present invention may be applied to the reflective LCD type head-mounted image display device.

Furthermore, the LCD 47 and LCD drive circuit 46 shown in Fig. 8 may be replaced with an organic edge-lighted (EL) display module and a drive circuit for driving the display module. The circuits relevant to the backlight (the backlight power control circuit 49a, emission pulse adjustment unit 51, backlight emission circuit 52, and backlight 48) may be excluded. Power to be delivered to the drive circuit may be controlled, whereby glowing of the EL display module may be controlled. In this case, since a self-emissive display module is adopted, the necessity of controlling a backlight or a front light is obviated.

As mentioned above, when the display modes are switched, image display is stopped in order to retain a standby state until an image is stabilized. Alternatively, when a user-defined mode mentioned previously is invoked, for example, image display may be suspended until an image is stabilized.

Moreover, image display is, as mentioned above, suspended until an image is stabilized. At this time, noise may enter voice due to signal distortion. For this reason, preferably, voice generation is suspended during the same period as the period during which image display is suspended.

Furthermore, as mentioned above, when the power switch 35 is turned on, if the goggles 2 are not connected, the power supply is not turned on. The present invention is not limited to this mode. Alternatively, after the power supply is turned on, if it is detected that the connector 3a through which the control unit is connected to the goggles 2 is disjoined, power delivery may be discontinued automatically.

As mentioned above, if it is not detected that a video signal has been received, the backlight is turned off or the power supply is turned off. Consequently, unnecessary power consumption can be suppressed, and supply of power from a battery can be continued for a longer period of time. Moreover, even when an AC adapter is employed, unnecessary power consumption can be suppressed. Furthermore, instead of discontinuing delivery of power, power delivery may be suppressed compared with it usually is.

Moreover, the emission pulse adjustment unit is included for keeping voltage applied to the backlight constant despite a fluctuation in supply voltage. Consequently, the backlight can be held at a certain level of luminance. Moreover, the emission pulse adjustment unit is realized using a monostable multivibrator and therefore constructed to have simple circuitry.

Likewise, the emission pulse adjustment unit realized using a monostable multivibrator is used to readily prevent a decrease in the luminance of the backlight occurring during an initial period immediately after the power supply is turned on.

Moreover, when the goggles are not connected, the power supply is not turned on. Consequently, unnecessary power consumption can be previously prevented.

Furthermore, when the display modes or user-defined modes are switched, image display is suspended until an image is stabilized. A user will therefore not view a distorted image. This results in an improved sense of satisfaction to be given to a user.

In addition, whether the expansion circuit board is included is detected, and control is branched to a step associated with the result of the detection. Consequently, the same processing program can be used irrespective of whether the expansion circuit board is included. This enables exploitation of a sole manufacturing process and reduced costs.

As described so far, according to the present embodiment, whether a video signal has been received is detected. If it is not detected that a video signal has been received, power delivery to the backlight emission circuit or power delivery to the other circuits is discontinued or suppressed. Consequently, power consumption can be effectively suppressed without the necessity of performing complex manipulations.

Moreover, even if voltage induced by the power supply fluctuates, voltage applied to the backlight is held substantially constant. Consequently, the luminance of the backlight can be held substantially constant irrespective of the state of the power supply.

Furthermore, a pulsating signal of long pulse duration is transmitted for a predetermined period after the power supply is turned on. Therefore, the property of the backlight that the backlight exhibits a low luminance immediately after being actuated can be covered. Consequently, the backlight is caused to glow with the same luminance as the normal luminance from the instant the power supply is turned on.

When it is not detected that the main body of the head-mounted image display device is connected, delivery of power to the circuits incorporated in the head-mounted image display device is automatically discontinued. Consequently, unnecessary power consumption can be suppressed efficiently.

In addition, when image display modes are switched, viewing an unstable image is prevented or voice is deadened. Consequently, the sense of satisfaction to be given to a user will not be impaired.

Note that the present invention will not be limited to the aforesaid embodiment. It goes without saying that various variants and applied examples of the present invention can be formed without a departure from the gist of the present invention.

### Industrial Applicability

As described previously, a control unit for heat-mounted image display devices in accordance with the present invention detects whether a video signal has been received. A power supply is controlled based on the result of the detection. Power consumption can therefore be suppressed effectively without the necessity of performing complex manipulations.

Moreover, when it is not detected that a video signal has been received, delivery of power to circuits is discontinued or suppressed. Consequently, power can be saved more efficiently.

Furthermore, when it is not detected that a video signal has been received, delivery of power to a glowing illumination circuit is discontinued or suppressed. Delivery of power to an illuminating means that consumes a relatively large amount of power can be effectively controlled.

Even if voltage induced by the power supply fluctuates, voltage to be applied to the illuminating means remains substantially constant. Consequently, the luminance of the illuminating means can be held substantially constant irrespective of the state of the power supply.

In addition, a pulsating signal of long pulse duration is transmitted during a predetermined period after the power supply is turned on. Consequently, the property of the illuminating means that the illuminating means exhibits a low luminance immediately after being actuated can be covered. The illuminating means can be caused to glow with nearly the same luminance as the normal luminance from the instant the power supply is turned on.

When it is not detected that a main body of a head-mounted image display device is connected, delivery of power to the circuits incorporated in the head-mounted image display device is automatically discontinued. Consequently, unnecessary power consumption can be suppressed efficiently.

When image display modes are switched, a user is prevented from viewing an unstable image. The sense of satisfaction to be given to the user will therefore not be impaired.

Furthermore, voice is deadened, so a user will not hear voice affected by noise, and the sense of satisfaction to be given to the user will not be impaired.

## Claims

1. A control unit for head-mounted image display devices comprising:
a video signal detecting means for detecting whether a video signal has been received; and
a power control means for controlling a power supply according to the result of the detection performed by said video signal detecting means.

2. A control unit for head-mounted image display devices according to Claim 1, wherein:
when it is detected that a video signal has been received, said power control means delivers power to circuits incorporated in a head-mounted image display device; and
when it is not detected that a video signal has been received, delivery of power to the circuits incorporated in the head-mounted image display device is discontinued or suppressed.

3. A control unit for head-mounted image display devices according to Claim 1, further comprising a glowing illumination circuit that applies voltage to an illuminating means, which illuminates a display module that renders images, so as to cause said illuminating means to glow wherein:
when it is detected that a video signal has been received, said power control means delivers power to said glowing illumination circuit;
when it is not detected that a video signal has been received, said power control means discontinues or suppresses delivery of power to said glowing illumination circuit.

4. A control unit for head-mounted image display devices according to Claim 1, further comprising:
a glowing pulse adjusting means for monitoring voltage all the time, which is induced by a power supply and delivered from said power control means for when the voltage is high, producing a pulsating signal of short pulse duration, and for when the voltage is low, producing a pulsating signal of long pulse duration; and
a glowing illumination circuit for receiving supply voltage delivered from said power control means, boosting the supply voltage, and applying the resultant voltage to an illuminating means that illuminates a display module which renders images, wherein:
when the pulse duration of a pulsating signal produced by said glowing pulse adjusting means is short, said glowing illumination circuit boosts the supply voltage a little;
when the pulse duration of the pulsating signal is long, said glowing illumination circuit boosts the supply voltage largely; and
said glowing illumination circuit thus applies substantially constant voltage to said illuminating means.

5. A control unit for head-mounted image display devices according to Claim 4, wherein said glowing pulse adjusting means produces a pulsating signal of long pulse duration for a predetermined period after the power supply is turned on.

6. A control unit for head-mounted image display devices according to Claim 1, further comprising a detecting means that detects connection of a main body of a head-mounted image display device having a display module that renders images and an illuminating means that illuminates the display module, wherein:
when said detecting means fails to detect connection of the main body of the head-mounted image display device, said power control means automatically discontinues delivery of power to circuits incorporated in the head-mounted image display device.

7. A control unit for head-mounted image display devices according to Claim 1, further comprising:
a mode switching means for switching modes in which images are displayed; and
a control means for when said mode switching means switches modes, controlling at least one of voltage to be applied to an illuminating means and a driving signal to be transferred to a display module for a predetermined time until an image is stabilized in a selected mode, and for thus preventing a user from viewing an unstable image.

8. A control unit for head-mounted image display devices according to Claim 7, wherein when said mode switching means switches modes, said control means also deadens voice for the predetermined time.

9. A control unit for head-mounted image display devices comprising:
a detecting means for detecting connection of a main body of a head-mounted image display unit that has a display module which renders images and an illuminating means which illuminates the display module; and
a power control means for when said detecting means fails to detect connection of the main body of the head-mounted image display device, automatically discontinuing delivery of power to circuits incorporated in the head-mounted image display device.

10. A control unit for head-mounted image display devices comprising:
a mode switching means for switching modes in which images are displayed; and
a control means for when said mode switching means switches modes, controlling at least one of voltage to be applied to an illuminating means and a driving signal to be transferred to the display module for a predetermined time until an image is stabilized in a selected mode, and for thus preventing a user from viewing an unstable image.

11. A control unit for head-mounted image display devices according to Claim 10, wherein when said mode switching means switches modes, said control means also deadens voice for the predetermined time.
